# EUROPEAN PATENT SPECIFICATION

(11) **EP 3 233 755 B1**
(45) Date of publication and mention of the grant of the patent: **10.10.2018**
(21) Application number: 14835726.2
(22) Date of filing: 15.12.2014
(51) Int. Cl.: C04B 35/06, C04B 35/20, C04B 35/626, C04B 35/63, C04B 35/632, C04B 35/634, C04B 35/64

(54) **METHOD FOR PRODUCING STEATITE CERAMICS OF C 221 TYPE WITH IMPROVED ELECTRICAL PROPERTIES**
HERSTELLUNGSVERFAHREN VON C 221 TYP STEATITKERAMIK MIT VERBESSERTEN ELEKTRISCHEN EIGENSCHAFTEN
PROCESSUS DE PRÉPARATION DES CÉRAMIQUES EN STÉATITE DU TYPE C 221 AVEC DES MEILLEURES PROPRIÉTÉS ÉLECTRIQUES

(43) Date of publication of application: 25.10.2017
(73) Proprietor: Razvojni Center eNem Novi Materiali d.o.o., 1410 Zagorje ob Savi (SI)
(72) Inventor: RAMSAK, Irena, 1412 Kisovec (SI); RAZPOTNIK, Marija, 1411 Izlake (SI); HOLC, Janez, 1234 Menges (SI); KUSCER HROVATIN, Danjela, 1000 Ljubljana (SI)
(74) Representative: Macek, Gregor
(86) International application number: PCT/SI2014/000077
(87) International publication number: WO 2016/099405

(56) References cited:
- GB-A- 866 775
- SI-A- 20 689
- R.L. STONE: "Physical chemistry of firing steatite ceramics", JOURNAL OF THE CERAMIC SOCIETY, vol. 26, no. 10, 20 April 1943 (1943-04-20), pages 333-336, XP002737743, Pittsburg (USA)

## Description

The object of the invention is a process for producing steatite ceramics having controlled electrical properties for electrotechnology. Steatite ceramics of the invention belongs to a group of magnesium silicates of C 221 type. Steatite ceramics is an electrical insulator with low electrical conductivity at increased temperature, low dielectric constant and low dielectric losses.

It is used in electrotechnology as an electrical insulator. It is used for casings, housings of thermostats and fuses. Steatite ceramics properties are defined in Standard IEC 60672-3, Ceramic and glass-insulating materials. Steatite ceramics belongs to a subgroup of magnesium silicates C 200. The invention discloses a material from subgroup C 221 which is dense magnesium silicate based steatite ceramics with low dielectric losses. The standard requires the values of dielectric constant 6, dielectric losses at 1 MHz 1.2 x 10⁻³, specific electrical resistance at 200 °C is 1 x 10⁹ Ohm m, at 600 °C it is 1 x 10⁵ Ohm m. An extrapolated value at 400 °C is 1 x 10⁷ Ohm m. The steatite ceramics of C 221 type has requirements for higher electrical resistance and for more reproducible and controlled fabrication of final ceramic products.

Due to low price and its good electrical properties steatite ceramics is widely used, however, the available latest literature contains but few articles that discuss the problem from this field. Preparation of steatite ceramics was intensely searched in the 1950s; nowadays only solutions to a cheaper, higher quality and more reproducible production of products on an industrial scale are looked for.

Steatite ceramics products are mostly fabricated from natural materials that are ground and homogenised in water and then formed in their raw state by using various ceramic technological processes and finally blanks are fired at high temperatures. Firing is performed at temperatures around 1300 °C. During a firing process, chemical reactions, phase conversions take place, a glass phase and crystalline phases occur. The quantity of magnesium silicate which is the main crystalline phase in steatite ceramics depends on the materials used, the temperature and time of firing. Mineralogical composition of fired steatite ceramics is magnesium silicate and glass phase, whereas quartz and other crystalline forms of silicon oxide can also be present in small quantities. Usual materials for the preparation of steatite ceramics of C 221 type are natural materials such as talc, clay components (clays, bentonites, kaolins) and synthetic barium carbonate. Clays, bentonites and kaolins are the components that allow for a plastic forming of material. During the firing the talc is disintegrated to magnesium silicate, and silicon oxide, clays, bentonite and barium carbonate form a liquid phase which coats magnesium silicate granules and provide for densification of steatite ceramics. The liquid phase may contain impurities, such as alkaline oxides or iron oxides, which are introduced into the system with natural materials. The presence of these oxides reduces the electrical properties of steatite ceramics and it might not meet the required values according to standard IEC 60672-3.

In patent SI20689A compositions of steatite ceramics are disclosed which comprise talc, bentonite, kaolin, barium carbonate and zirconium silicate with the addition of plasticizers and defloculants. Said compositions are used for manufacturing of steatite ceramics with low dielectric losses and low leakage currents.

In patent application GB 866 773 a process for the manufacture of steatite ceramics comprising steatite/talc/zirconium silicate, Mg (CO₃), Ba(CO₃), and ball clay are disclosed with low specific electrical resistance at 400 °C.

In the article "Physical chemistry of firing steatite ceramics", R.L. Stone: Journal of Ceramic Society a composition of normal as well as low-loss steatite bodies on the MgO-Al₂O₃-SiO₂ phase diagram is disclosed and their characteristics with regard to the firing range and refractoriness depending on the composition are discussed. Elements such as SiO₂, and ZrO₂ give good firing range and an excessive increase in the refractoriness.

The task and goal of the invention is a method for the production of such steatite ceramics of C 221 type that will have controlled and reproducible electrical properties, i. e., electrical resistance higher than required by the standard and other standard-required characteristics.

The task of the invention is solved by a method for producing steatite ceramics, in which the influence of iron oxide impurity is reduced by an addition of calcium oxide or magnesium oxide or a mixture of both in any weight ratio, thus the electrical resistance of steatite ceramics is increased. Calcium oxide and magnesium oxide can be added in the form of hydroxides, carbonates, nitrates or other salts, such as calcium carbonate - marble, calcium magnesium carbonate - dolomite, calcium hydroxide, magnesium hydroxide, magnesium hydroxy carbonate, magnesium or calcium nitrate.

The starting material, i. e., a mixture for the preparation of steatite ceramics of the invention, contains the following ingredients in % by weight:
- 80 to 88 % of talc
- 5 to 15 % of clay components
- 5 to 10 % of barium carbonate
- 0.1 to 10 % of calcium oxide or magnesium oxide or a mixture of both in the form of hydroxides, carbonates, nitrates or other salts
- additives, such as surfactants e. g. polyphosphates, polyacrylates, lignosulphonates, and binders e. g. polyvinyl alcohol, polyethylene glycol, polyvinyl butyral.
The total content of iron oxide impurity in the starting material is up to 3 % by weight.

According to the process of the invention, the starting material is wet ground in a grinder that is coated with a ceramic coating made from a material having hardness identical to Al₂O₃ or higher and contains corundum ceramic balls containing from 90 % by weight to 94 % by weight of Al₂O₃. The dry matter/water weight ratio is 40/60 or rather such that grinding is performed in a ball mill up to an average particle size below 10 micrometres. Grinding is performed for 4 to 24 hours to reach an average particle size below 10 micrometres. Particle size is controlled by a laser granulometer. After the grinding, part of the water is removed from the suspension, the suspension is poured onto a dry plaster surface where it is left to dry up to a water content of 15 to 35 % by weight. After drying, the water content in the ceramic material should be 15 to 35 % by weight to allow for forming of products in an extruder. The blanks are dried in a drier at 105 °C for 10 to 24 hours to reach the final content of water of 1 % by weight or less. The blanks are fired at a temperature between 1280 and 1350 °C for 1 hour to 10 hours, so that steatite ceramics of the invention is obtained. While fired, the blanks are in a vertical or horizontal position. After the firing is completed, the products have their final shape and dimensions.
Steatite ceramics without an additional of calcium oxide and magnesium oxide has specific electrical resistance 0.6 x 10⁷ Ohm m at 400 °C. The preparation procedure is described in Embodiment 1, given as a comparative, useful for understanding the invention. In case when calcium and magnesium oxides are added (Embodiments 2 and 3), the specific electric resistance of the ceramics is increased to a value of 1.4 x 10⁷ Ohm m at 400 °C.

### Embodiment 1

Ingredients that contain natural humidity: talc (2453 g), clays (121 g), kaolin (58 g), bentonite (92 g) and barium carbonate (189 g) are added to a grinder, water, surfactants (50 g) and binder (17 g) are added, such that the final suspension has a dry matter/water weight ratio 61/39. The mixture is ground for 17 hours and 30 minutes or until an average particle size of 5.7 micrometres is obtained. After the grinding is completed, the suspension is poured onto a dry plaster surface. Test blanks are formed from the mass, they are dried at a temperature of 105 °C for a sufficient time to contain less than 1 % of humidity and then fired at a temperature of 1319 °C for 2 hours. The fired test blanks have a mechanical bending strength of 135 MPa and specific electrical resistance at 400 °C 0.6 x 10⁷ Ohm m.

### Embodiment 2

Ingredients that contain natural humidity: talc (2409 g), clays (121 g), kaolin (58 g), bentonite (92 g), barium carbonate (189 g), dolomite (43 g) are added to a grinder, water, surfactants (50 g) and binder (17 g) are added, such that the final suspension has a dry matter/water weight ratio 61/39. The mixture is ground for 8 hours or until an average particle size of 6.3 micrometers is obtained. After the grinding is completed, the suspension is poured onto a dry plaster surface. Test blanks are formed from the mass, they are dried at a temperature of 105 ° for a sufficient time to contain less than 1 % of humidity and then fired at a temperature of 1316 °C for 2 hours. The fired test blanks have a mechanical bending strength of 133 MPa and specific electrical resistance at 400 °C 1.4 x 10⁷ Ohm m.

### Embodiment 3

Ingredients that contain natural humidity: talc (2402 g), clays (119 g), kaolin (57 g), bentonite (92 g), barium carbonate (186 g), marble (28.4 g) and dolomite (28.4 g) are added to a grinder, water, surfactants (50 g) and binder (17 g) are added, such that the final suspension has a dry matter/water weight ratio 61/39. The mixture is ground for 7 hours and 30 minutes or until an average particle size of 6.4 micrometres is obtained. After the grinding is completed, the suspension is poured onto a dry plaster surface. Test blanks are formed from the mass, they are dried at a temperature of 105 ° for a sufficient time to contain less than 1 % of humidity and then fired at a temperature of 1316 °C for 2 hours. The fired test blanks have a mechanical bending strength of 141 MPa and specific electrical resistance at 400 °C 1.4 x 10⁷ Ohm m.

## Claims

1. Method for producing steatite ceramics of C 221 type with improved electrical properties **characterized in that** it includes:
- wet grinding of mixtures of starting ingredients in % by weight:
- 80 to 88 % of talc
- 5 to 15 % of clay components
- 5 to 10 % of barium carbonate
- 0.1 to 10 % of calcium oxide or magnesium oxide or a mixture of both in the form of hydroxides, carbonates, nitrates or other salts
- additives, such as surfactants and binders,
- the content of iron oxide in the starting material is up to 3 % by weight;
wherein the grinding is performed for 5 to 25 hours to reach an average particle size below 10 micrometres and the grinding of said mixture is performed in a grinder that is coated with a ceramic coating contains corundum ceramic balls containing from 90 % by weight to 94 % by weight of Al₂O₃;
- after the grinding, the suspension is poured onto a dry plaster surface where it is left to dry up to a water content of 15 to 35 % by weight, from which blanks are made;
- drying of blanks in a drier at 105 °C for 10 to 24 hours, such that they contain less than 1 % by weight of humidity;
- firing of blanks at a temperature of 1280 to 1350 °C for 1 hours to 10 hours.

2. Method according to claim 1 **characterized in that** calcium oxide in the form of hydroxides, carbonates, nitrates or other salts is added.

3. Method according to claim 1 **characterized in that** magnesium oxide in the form of hydroxides, carbonates, nitrates or other salts is added.

4. Method according to claim 1 **characterized in that** a mixture of calcium oxide and magnesium oxide in the form of hydroxides, carbonates, nitrates or other salts is added.

## Patentansprüche

1. Verfahren zur Herstellung von Steatit-Keramiken des Typs C 221 mit verbesserten elektrischen Eigenschaften, **dadurch gekennzeichnet, dass** es umfasst:
- Nassmahlen der Mischungen von Ausgangsbestandteilen in Gew.-%:
- 80 bis 88% Talkum
- 5 bis 15% Tonkomponenten
- 5 bis 10% Bariumcarbonat
- 0,1 bis 10% Calciumoxid oder Magnesiumoxid oder eine Mischung aus beiden in Form von Hydroxiden, Carbonaten, Nitraten oder anderen Salzen
- Additive, wie Tenside und Bindemittel,
- der Gehalt an Eisenoxid im Ausgangsmaterial bis zu 3 Gew.-% beträgt;
wobei das Mahlen 5 bis 25 Stunden durchgeführt wird, um eine mittlere Teilchengrößeunter 10 Mikrometern zu erreichen, und das Mahlen der Mischung in einer Schleifmaschine durchgeführt wird, der mit einer keramischen Beschichtung beschichtet ist, die Korund-Keramikkugeln enthält, die 90 Gew.-% bis 94 Gew.-% Al₂O₃ enthalten;
- nach dem Mahlen wird die Suspension auf eine trockene Gipsoberfläche gegossen, wo sie gelassen wird, bis sie zu einem Wassergehalt von 15 bis 35 Gew.-% austrocknet, aus der Rohlinge hergestellt werden;
- Trocknen der Rohlinge in einem Trockner bei 105°C für 10 bis 24 Stunden, so dass sie weniger als 1 Gew.-% Feuchtigkeit enthalten;
- Brennen der Rohlinge bei einer Temperatur von 1280 bis 1350 °C für 1 Stunde bis 10 Stunden.

2. Verfahren nach Anspruch 1, **dadurch gekennzeichnet, dass** Calciumoxid in Form von Hydroxiden, Carbonaten, Nitraten oder anderen Salzen zugesetzt wird.

3. Verfahren nach Anspruch 1, **dadurch gekennzeichnet, dass** Magnesiumoxid in Form von Hydroxiden, Carbonaten, Nitraten oder anderen Salzen zugesetzt wird.

4. Verfahren nach Anspruch 1, **dadurch gekennzeichnet, dass** eine Mischung aus Calciumoxid und Magnesiumoxid in Form von Hydroxiden, Carbonaten, Nitraten oder anderen Salzen zugesetzt wird.

## Revendications

1. Procédé de fabrication d'une céramique stéatitede type C 221 à propriétés électriques améliorées **caractérisé en ce qu'**il comprend :
- broyage humide de mélanges d'ingrédients de départ en % en poids :
- 80 à 88 % de talc
- 5 à 15 % de composants d'argile
- 5 à 10 % de carbonate de baryum
- 0,1 à 10 % d'oxyde de calcium ou d'oxyde de magnésium ou d'un mélange deceux-ci sous la forme d'hydroxydes, carbonates, nitrates ou autres sels
- additifs, tels que des tensioactifs et des liants,
- la teneur en oxyde de fer dans le matériau de départ est jusqu'à 3 % en poids ;
le broyage étant effectué pendant 5 à 25 heures pour atteindre une dimension de particulesmoyenne inférieure à 10 micromètres et le broyage dudit mélange étant effectué dans un broyeur qui est revêtu d'un revêtement céramique contenant des billes de céramique de corindon contenant de 90 % en poids à 94 % en poids d'Al₂O₃ ;
- après le broyage, la suspension est versée sur une surface de plâtre sèche où elle est laissée à sécher jusqu'à atteindre teneur en eau de 15 à 35 % en poids, à partir de laquelle des ébauches sont fabriquées ;
- séchage d'ébauches dans un séchoir à 105 °C pendant 10 à 24 heures, de telle sorte qu'elles contiennent moins de 1 % en poids d'humidité ;
- cuisson d'ébauches à une température de 1280 à 1350 °C pendant 1 heure à 10 heures.

2. Procédé selon la revendication 1 **caractérisé en ce que** l'on ajoute de l'oxyde de calcium sous la forme d'hydroxydes, de carbonates, de nitrates ou d'autres sels.

3. Procédé selon la revendication 1 **caractérisé en ce que** l'on ajoute de l'oxyde de magnésium sous la forme d'hydroxydes, de carbonates, de nitrates ou d'autres sels.

4. Procédé selon la revendication 1 **caractérisé en ce qu'**un l'on ajoute une mélange d'oxyde de calcium et d'oxyde de magnésium sous la forme d'hydroxydes, de carbonates, de nitrates ou d'autres sels.
